Europäisches Patentamt

European Patent Office

Office européen des brevets

(11) Publication number: **0 365 995**

**A2**

## (12) EUROPEAN PATENT APPLICATION

(21) Application number: 89119340.1

(22) Date of filing: **18.10.89**

(51) Int. Cl.⁵: **B23Q 7/14 , B24B 9/10**

(30) Priority: **26.10.88 IT 1257388**

(43) Date of publication of application:
**02.05.90 Bulletin 90/18**

(84) Designated Contracting States:
**DE ES FR GB**

(71) Applicant: **ZANETTI A. e C. S.r.l.**
**Via XXV Aprile, 18**
**I-40057 Cadriano di Granarolo (Bologna)(IT)**

(72) Inventor: **Faga, Riccardo**
**Viale Roma 13**
**I-40100 Bologna(IT)**
Inventor: **Montanari, Gabriele**
**Via Bertini 14**
**I-40127 Bologna(IT)**

(74) Representative: **Porsia, Bruno et al**
**c/o Succ. Ing. Fischetti & Weber Via Caffaro**
**3/2**
**I-16124 Genova(IT)**

(54) **Apparatus for turning travelling glass sheets.**

(57) The glass sheet turning structure (23, 40, 140) fitted with suction grippers (41), is mounted on a motor-driven carriage (11) being apt to run after a travelling glass sheet to be turned, and to turn the same by ninety degrees, without the to-be-turned glass sheet needing to be stopped. The linear velocity at which the carriage is operatively advanced, normally is equal to the operative speed of the rectilinear glass sheet grinding machines in the glass sheet grinding plant, in which the glass sheet turning apparatus according to the invention, are fitted, the speed at which a glass sheet is turned being automatically caused to conform to the speed at which the carriage (11) is advanced, and to the dimensions of the to-be-turned glass sheets, which are therefore checked by a scanning glass sheet measuring device (C) operating in the initial section of the glass sheet grinding plant, and being connected to the electronic processing unit controlling the speed of rotation of the electric motors (20, 37), which through respective drives (17, 21; 32, 39) of the ball circulating screw/nut screw type, rectilinearly move the said carriage (11), and rotate the glass sheet-turning square arms (40, 140) in the glass sheet turning structure (23, 40, 140), the said square arms being fitted with suction grippers (41) for gripping the glass sheet to be turned.

Fig.6

## Apparatus for turning travelling glass sheets

The invention refers to the lines for processing by an automatic continuous cycle, the four sides of glass sheets or any like material, by means of four normally in-line rectilinear grinding machines, with glass sheet turning apparatus being interposed therebetween, which cause a glass sheet issuing from a grinding machine, to be turned by ninety degrees, so that a turned glass sheet will be properly oriented relative to the successive glass sheet grinding machine. The glass sheets to be turned are arranged in a substantially vertical position. The glass sheet turning apparatus that are used in the known plants, are constructed for operating on stationary glass sheets, so that there is a considerable distance between a glass sheet grinding machine and the next one, which affects the length of the whole plant.

A first object of the invention is to reduce the length of the plants according to the known art, by the provision of a glass sheet turning apparatus which is capable of operating on travelling sheets. The glass sheet turning unit in the glass sheet turning apparatus, according to the invention, is actually mounted on a carriage being imparted a rectilinear motion for causing the same to run after a glass sheet to be turned, which is thus allowed to prosecute its linear forward motion toward the successive grinding machine.

A further peculiar feature of the invention is that the above disclosed glass sheet turning apparatus is so provided that the linear velocity at which this apparatus is advanced, and the speed at which the glass sheet turning unit is angularly moved, can be changed and automatically caused to conform to the linear velocity at which the grinding machines are working, and to the characteristic dimensions of the glass sheet to be every time turned. To this end, the linear movement of the carriage in the glass sheet turning apparatus according to the invention, and the angular movement of the suction gripper means are obtained by using ball circulating screws/nut screws driven by electric motors with a braking unit, a tachymetric dynamo, and an encoder, which are controllable by an electronic processing unit being supplied with the data relating to the linear velocity of the grinding machines forward motion, and automatically receiving the data relating to the dimensions of the glass sheets which are cyclically introduced into the processing line, from a glass sheet measuring device located in the initial section of the processing line.

Further features of the invention, and the advantages arising therefrom, will become more clearly apparent from the following specification of one preferred embodiment thereof, which is shown merely by way of an example in the Figures of the four annexed sheets of drawing, in which:

Figure 1 is a diagrammatic, top plan view of the glass sheet processing line to which reference is made.

Figures 2, 3, and 4 are diagrammatic, front elevational views respectively showing the glass sheet measuring device, one of the rectilinear glass sheet grinding machines, and one of the glass sheet turning apparatus forming the object of the invention.

Figures 5 and 6 are perspective views of the glass sheet turning apparatus according to the invention, in two different operative positions.

Figure 7 is a longitudinal sectional view with parts in sight, showing the carriage of the glass sheet turning apparatus.

Figure 8 shows further details of the carriage according to Figure 7, in a sectional view taken on line VIII-VIII.

Figure 9 shows a detail of the glass sheet turning unit in the apparatus according to the invention.

Figure 10 is a longitudinal sectional view of one of the glass sheet suction gripper units in the glass sheet turning apparatus according to the invention.

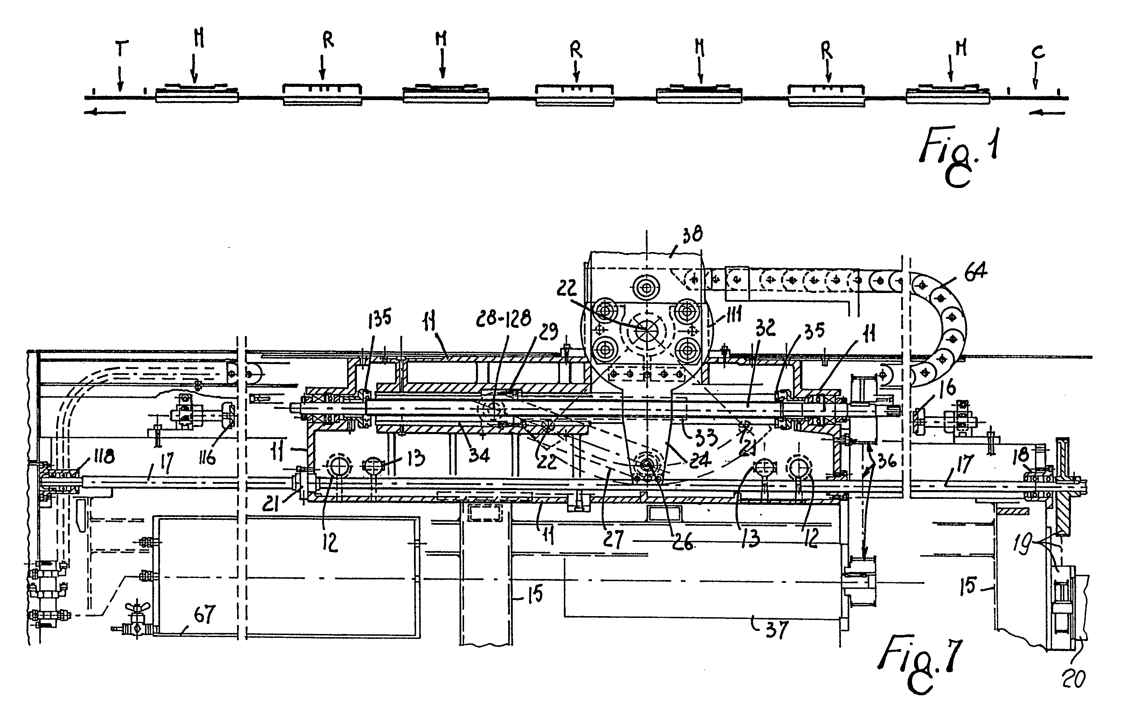

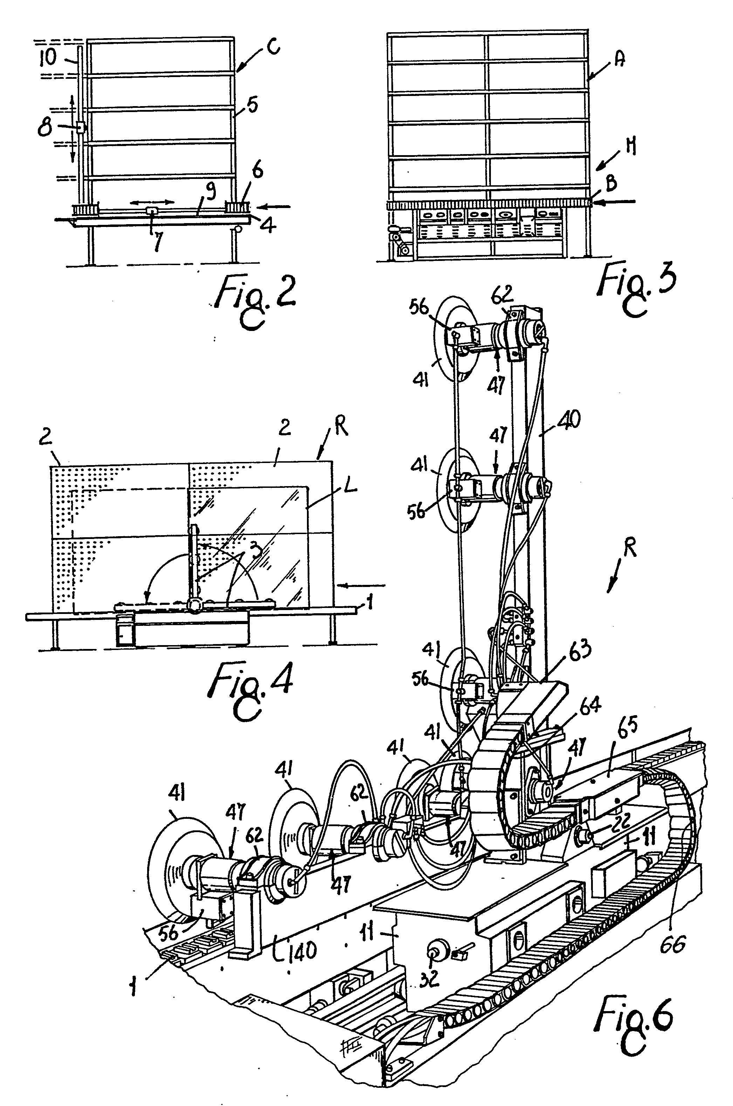

In the diagrammatic view shown in Figure 1, reference M denotes the aligned, equispaced, rectilinear glass sheet grinding machines of known type, and each one of said grinding machines is provided for processing the lower horizontal side of a glass sheet which is introduced into a grinding machine in a substantially upstanding position, and is however slightly inclined sideways, so that the glass sheet will be supported by a glass sheet-bearing side frame A provided with rollers, not shown in Figure 3. The grinding machine M is, for example, of the type comprising a pair of tracks B with their axis of rotation being vertical, which clamp a glass sheet at a short distance from its lower side which is left free, so that the glass sheet lower side is allowed to interfere with the various glass sheet grinding and finishing stations which are suitably arranged in the said grinding machine.

Still in Figure 1, reference R denotes the glass sheet turning apparatus which are placed between the said grinding machines M, and are diagrammatically shown in Figure 4. These glass sheet turning apparatus comprise a rectilinear, horizontal glass sheet conveying line 1 which supports the lower horizontal side of a glass sheet L delivered from a glass sheet grinding machine M, and in place of the grinding machine roller frame A, the said glass sheet turning apparatus comprise a

2

frame 2 for laterally supporting a glass sheet, of the type having a velvety, air-blowing plane, so that an air cushion is provided, which facilitates the sliding and the turning of a glass sheet. On that side of the glass sheet conveying line 1 which is not engaged by the said frame 2, there is provided the carriage-mounted swingable active part 3 of the glass sheet turning apparatus according to the invention, to be described more in detail later on, which is fitted with suction grippers being caused ao to grip a glass sheet L travelling at a certain speed, and to turn the said glass sheet by ninety degrees around its front lower corner, so that the said glass sheet side which is consecutive to the glass sheet side having been processed by the upstream grinding machine, and which is to be processed by the successive glass sheet grinding machine M, is rested on the line 1. After the active part 3 of the glass sheet turning apparatus R having been moved through its operative travel, suitable for a glass sheet to be turned thereby, the said active part 3 is returned into its original position for a new working cycle to be repeated.

As mentioned, the means which are provided for the active part 3 of the glass sheet turning apparatus R to be rectilinearly moved and rotated, should be automatically driven at a changeable speed, as a function of the speed at which the glass sheets are caused to travel, and of their dimensions. For this purpose, the electronic processing unit that controls the movements of the active part 3 of the glass sheet turning apparatus R, is supplied through tachymetric connections with the data relating to the running speed of the grinding machines, and is also supplied with the data relating to the dimensions of the glass sheets having been introduced into the glass sheet processing line, by a glass sheet measuring device C located in the initial section of the glass sheet grinding plant according to Figure 1, and diagrammatically shown in Figure 2. This glass sheet measuring device comprises a rectilinear horizontal conveyor 4 supporting the glass sheets by their lower side, and a glass sheet-bearing side frame 5 with not shown idle rollers, and a pair of motor-driven, oppositely arranged horizontal tracks 6 clamping the glass sheet by their lower side, and moving the same forward sinchronously with the underlying glass sheet-supporting conveyor. When the forepart of a glass sheet abuts against a not shown, fixed sensor, the glass sheet-conveying means 4 and 6 are stopped, together with the supported and clamped glass sheet, and by an automatic control, the two carriages 7 and 8 are set in motion, and are caused to respectively slide on a horizontal guide 9 and on a vertical guide 10, on which sensors, for example of the optoelectronic type, are mounted. The scanning sliding movement of these carriages is controlled by small motors with respective encoders working out signals that are proportional to the length and the height of a scanned glass sheet, and these signals are sent to the electronic processing unit that controls the movement of the active parts 3 of the glass sheet turning apparatus. Once a glass sheet has been measured, the glass sheet scanning carriages 7, 8 are quickly returned into their original position, and the conveying means 4 and 6 are re-actuated, so that the measured glass sheet is moved away, and a successive glass sheet is moved forward.

It should be understood that as an alternative to the described solution, provisions may be made for the still horizontally advanced glass sheets to be measured by the sliding movement of only the glass sheet scanning carriage 8 with the vertical sensor, or of both of the glass sheet scanning carriages 7, 8, this in order to shorten the measuring time, and to afford the feature of a continuous operation to the plant. These changes are conceivable and easily practicable by those skilled in the art, so that the same will not be further considered.

Still in Figure 1, reference T denotes the conveyor located downstream of the glass sheet grinding plant, which collects and discharges the glass sheets being delivered from the last glass sheet grinding machine M.

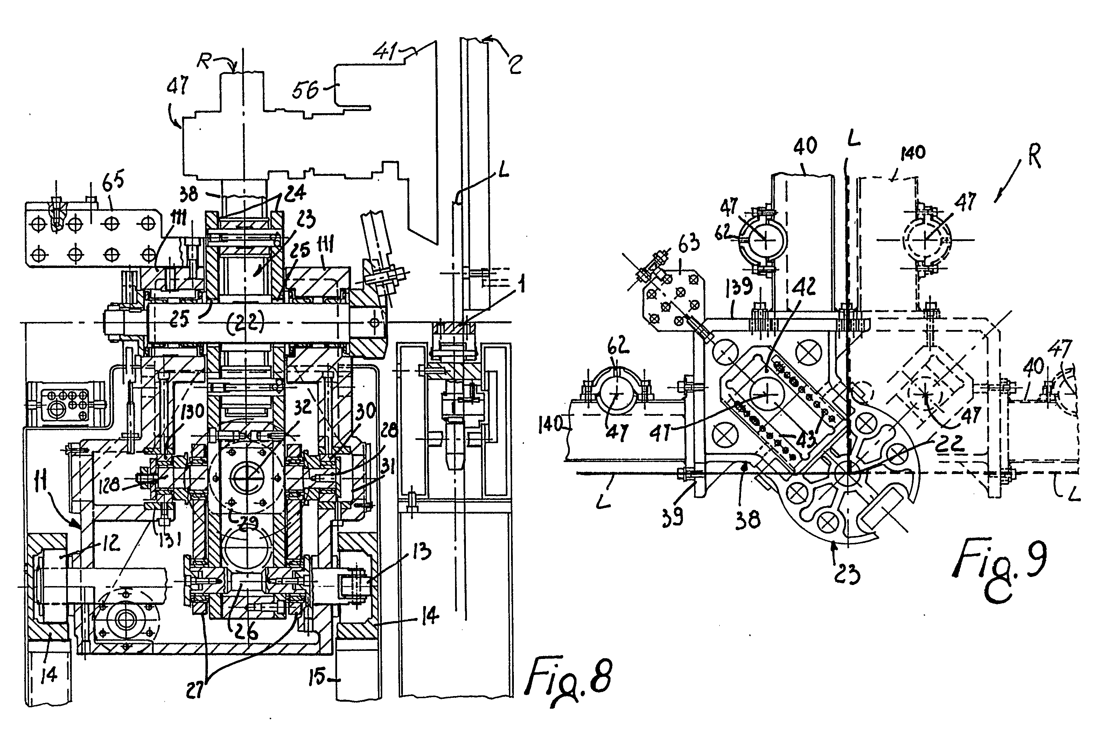

In Figures 7, 8, and 9, numeral 11 denotes the carriage supporting the active part 3 of a glass sheet turning apparatus R with its sides being provided with pairs of horizontal-axis bearings 12, and with pairs of vertical-axis bearings 13, which slide within horizontal guides 14 fixed to the base frame 15 of the said glass sheet turning apparatus. Adjustably fixed to the base frame 15 are shock absorbers 16, 116, against which the forward and backward travel of carriage 11 is stopped. The reciprocating movement of carriage 11 is ensured by the mutual cooperation of a ball-circulating nut screw 21 and worm screw 17, the said nut screw being made integral with the said carriage, and the said worm screw 17 being parallel to the guides 14 and being rotatably supported at the ends thereof by supports with bearings 18, 118 fixed to the base frame 15, and through a motion transmission drive 19 of the toothed pulleys and belt type, the said worm screw 17 is by its ends connected to a preferably electric motor 20 flange-mounted onto the base frame 15, with its speed being electronically controllable, and with an axially arranged encoder, a tachymetric dynamo and a braking unit.

The carriage 11 is provided at its top with a fork shaped, elevated structure 111 which by means of bearings rotatably supports a pivot 22 arranged at right angles with the guides 14, and acting as fulcrum for the glass sheet turning apparatus active part 3 to be rotated thereabout.

Keyed onto the said pivot is the drum 23, which supports the glass sheet turning apparatus active part 3 fitted with a set of suction grippers, which will be disclosed hereinafter; the said drum is shown more in detail in Figure 9, and has a pair of angularly adjustable, parallel flat lever arms 24 attached to two opposite sides thereof, the said lever arms 24 being fitted on pivot 22 with the interposition of bearings 25, and extending downward beyond the said pivot by a properly long section. Parallel links 27 are articulatingly connected at 26 to the lower end of said lever arms 24, and by their opposite end the said links 27 are in turn articulatingly connected to a pair of oppositely arranged, horizontal pivots 28, 128, which by their sidewall are attached to a ball-circulating nut screw 29, and carry respective bearings 30, 130 which are slidable in rectilinear guides 31, 131 suitably provided on the sides of carriage 11, and arranged parallel to the guides 14 for said carriage. The nut screw 29 cooperates by a close fit with a worm screw 32 which is parallel to the said guides 31, and has its ends rotatably supported by the two end sides of carriage 11. In Figure 7 the lever arms 24 are shown by solid lines, in a position which is intermediate to the actual operative positions, in which the lower articulation 26 of the said lever arms is located in their end-of-stroke position Z1 or Z2. It is clearly apparent that owing to the worm screw 32 being turned in the one or the other direction, the lever arms 24 can be moved from the position Z1 into the position Z2, and vice-versa. The relative stop positions of the worm screw 29 are dampened thanks to the cooperation of the ends of respective tubular members 33, 34 fastened to the worm screw 32, and coaxially encompassing the worm screw 32, with shock absorbers 35, 135 arranged close to the members supporting the ends of the said worm screw 32. The worm screw 32 has one end connected through a drive 36, such as a drive of the toothed pulley and belt type, to a preferably electric motor 37, with its speed being electronically controllable, and with an axially arranged encoder, a tachymetric dynamo, and a braking unit. The motors 37 and 20 are connected to an electronic processing unit receiving from the glass sheet measuring device C the data relating to the dimensions of the glass sheets which are cyclically introduced into the glass sheet processing line, and by means of the said glass sheet measuring device the linear velocity at which the glass sheets are advanced along the glass sheet processing line can be set, also as a function of the composition of the material from which the glass sheets are made, of their thickness, and the kind of processing to which they have to be subjected. Thus, the carriage 11 is caused to operatively travel toward the left, as seen in Figure 7, at a speed which is always equal to the linear velocity of the glass sheet grinding machines M, while it is caused to travel in the reverse direction at a changeable speed, so that any dead times are reduced. As a function of the glass sheets dimensions, the speed of rotation of motor 37 will be automatically changed according to a predetermined program, in a manner which is inversely proportional to the dimensions of the glass sheets to be turned.

As shown in Figure 9, the drum 23 keyed onto the pivot 22, has a radial extension 38 which in an orthogonal position to the said pivot, is provided with two 90° angularly equispaced, consecutive flat surfaces 39, 139, to which respective straight arms 40, 140 are perpendicularly secured, with the position of said arms being adjustable relative to the pivot 22, the said arms 40, 140 lying in an ideal plane parallel to a glass sheet to be turned, fed into the glass sheet turning apparatus R according to the invention. Arranged on each arm 40, 140 are three suction grippers 41 to be disclosed hereinafter, with their operative front side turned toward a glass sheet to be gripped thereby. A further auction gripper 41 like the former grippers, is placed on a slide 42 which is adjustably fitted in a rectlinear slide-guiding housing 43 formed in the extension 38 of drum 23, and is oriented radially to pivot 22. Thanks to this latter suction gripper 41, the glass sheet turning apparatus of the invention can be efficiently operated even with small-sized glass sheets.

Referring to Figure 10, there is shown that each suction gripper 41 is fitted on a backing plate 44 which by means of its own axial hub 144, is supported by the forward end of the hollow stem 46 of a pneumatic jack 47 of the single acting type, and is pivotable about an intermediate self-aligning bearing 45. Designated by numeral 48 is the circuit for feeding the jack 47, by numeral 49 is its piston, by numeral 50 is the circuit for releasing the chamber which is not to be under pressure, and by numeral 51 is the return spring which is arranged inside the hollow stem 46, and has one end anchored to a plug 52 fixedly secured to the hollow stem 46, and its opposite end fastened to a crosspiece 53 which is diametrically applied to the rear end of the jack body 147. Numeral 54 denotes two bushings for guiding the hollow stem 46. Radially attached to the forepart 247 of the jack 47 body, is a fork 55 which guides a body 56 which is fixed to the rear side of the suction gripper supporting plate 44. A slide valve is housed in body 56, with its movable plug 57 being normally kept in the valve closing position by a spring 58. Designated by 59 is the chamber connected through the circuit 60 to a suction source. The other slide valve chamber 61 which depending on the axial position of plug 57, can be set in communication with the chamber 59, freely opens into the concave portion of a suction gripper 41, and the said plug 57 has an integral prolongation 157 extending into the suction gripper concave portion, and ending into a plastics material head.

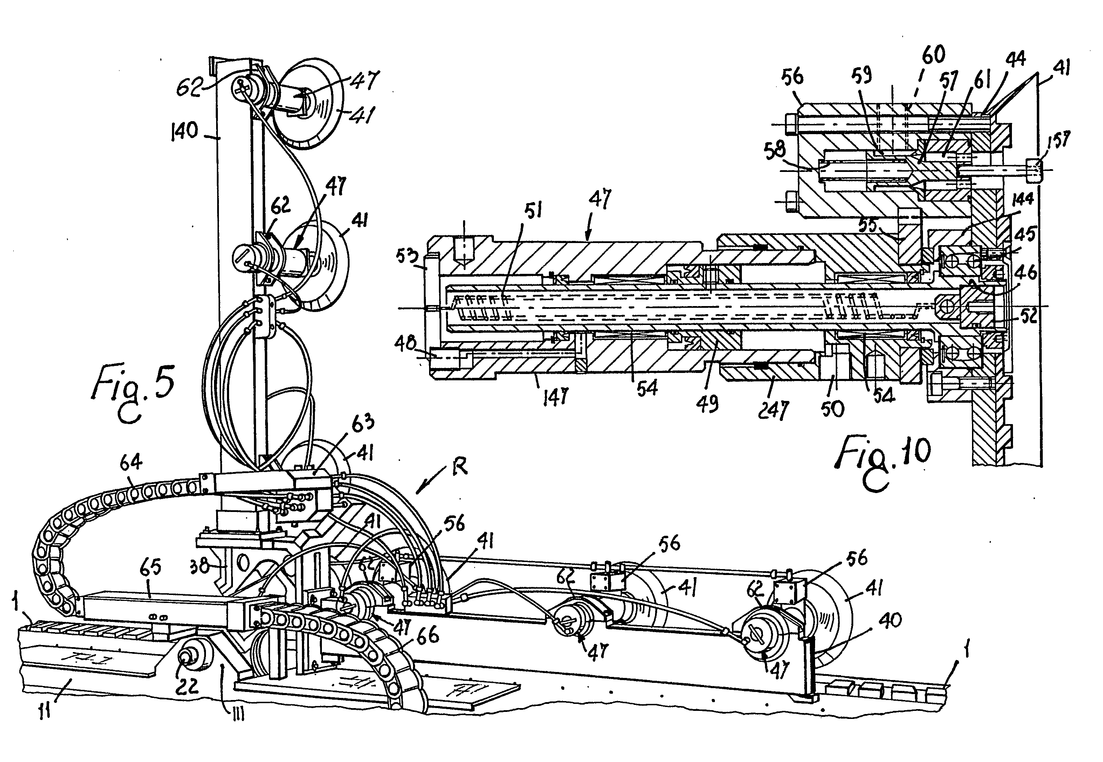

In Figures 5 and 6 there appears that the described suction grippers 41 are fitted on the arms 40, 140 with the interposition of suitable supports 62, and that the said suction grippers are connected by means of hoses to an intermediate support 63 fixed to the median portion of extension 38. By means of hoses accomodated in the inside of an articulated duct 64, this support 63 is connected to a further intermediate support 65 fixed to one of the top ends of the fork-shaped extension 111 of carriage 11 (Figure 8), and which by means of further hoses accomodated in an articulated duct 66, is in turn connected to a control unit 67 fixed to the base frame of the apparatus, in which solenoid valves are provided for controlling the suction grippers, as it will be disclosed hereinafter.

The active part 3 of the glass sheet turning apparatus R is operated as follows. At the starting of every glass sheet processing cycle, the carriage 11 is located in its end-of-travel position, in which the tubular member 33 bears against the shock absorber 35. The straight arms 40, 140 are in the condition shown in Figure 5, and the jacks which carry the suction grippers are at rest, as shown in Figure 10. When a glass sheet to be turned arrives at the glass sheet turning apparatus, with the apex of its lower front corner into alignment with the axis of pivot 22, the actuation is commanded of motor 20 (Figure 7), so that the carriage 11 is advanced thereby at the same linear velocity as the to-be-turned glass sheet, and the said aligned condition is thus maintained. The suction grippers which are apt to cooperate with the surface of the glass sheet to be turned, are automatically actuated according to the dimensions of the said glass sheet, and by the jacks 47 being actuated, the said suction grippers are drawn close to the to-be-turned glass sheet with the required pressure. The suction grippers are thus caused to properly bear closely against the glass sheet to be turned, thanks to the self-aligning bearing 45 which allows the suction grippers to be pivoted around the axis of the stem supporting them (Figure 10). During the stroke by which the suction grippers are drawn close to the glass sheet to be turned, the suction grippers are deformed, and the feelers 157 will interfere with the said glass sheet, and will connect the chamber 61 and the chamber in the suction grippers to the suction circuit 59, 60, so that the glass sheet is automatically caused to adhere against the suction grippers and against the straight arms 40, 140. At this stage, the actuation of motor 37 is automatically commanded for the arms 40, 140 to be rotated, which are thus moved to the position shown in Figure 6 and in Figure 9 by solid lines, while the carriage 11 is caused to prosecute its active travel. In timed relation, the suction for the suction grippers 41 is neutralized, and the suction grippers are retracted into their rest position, away from the turned glass sheet. The rotation of motors 20, 37 is reversed, and the carriage 11 and the arms 40, 141 are returned into their cycle-starting position, so that they can be caused to act on the next sheet to be turned, following the glass sheet having been just turned by 90°. It is apparent that the use of electric motors with their speed being electronically changeable, and the use of drives of the ball circulating screw/nut screw type, guarantee that the apparatus according to the invention will be moved in a precise manner.

The electronic processing unit controlling the present glass sheet grinding plant, memorizes the characteristic features of each glass sheet from the inlet to the outlet of said plant. Each glass sheet to be turned is expected at the appointment with the successive glass sheet turning apparaao tus, after a fixed number of pulses emitted from an encoder connected to the glass sheet advancing means. The said electronic processing unit so controls the said glass sheet grinding plant that when a glass sheet, for example, a glass sheet in broken condition, is removed from the glass sheet processing line, the said unit automatically sets the glass sheet turning apparatus in such a condition as to make them ready for properly operating on the glass sheet coming after the removed glass sheet, whatever be the size of the glass sheet, provided that its size be within the limits as foreseen for the present glass sheet grinding plant.

## Claims

1. An apparatus for turning by ninety degrees glass sheets, or the like, issuing from a rectilinear grinding machine, and directed to a successive grinding machine in order to have the consecutive side thereof processed, with the glass sheets being kept in travelling condition, so that the glass sheets to be turned need not to be previously stopped, which apparatus comprises a glass sheet-turning square arm unit (40, 140), or any like means, fitted with suction grippers (41) which are apt to be drawn close to a glass sheet to be turned, and away therefrom, and is characterized in that it is mounted on a motor-driven carriage (11) being slidable on guides (14) arranged parallel to the glass sheet conveying line, and being movable in the same direction and at the same speed as a glass sheet to be turned, as soon as the said glass sheet is arriving at the position in which the same is to be turned, so that the to-be-turned glass sheet will be gripped and turned while it is being advanced, the carriage (11) and the glass sheet-turning square arm unit (40, 140) being then returned by a contrary movement into their initial position, for a new glass sheet processing cycle to be repeated, the whole arrangement being such that the distance between the glass sheets to be processed is reduced, and the length of the glass sheet grinding plant is shortened.

2. The apparatus according to Claim 1, characterized in that the carriage (11) carrying the glass sheet-turning square arm unit (40, 140) is imparted a reciprocating rectilinear motion, and the said glass sheet-turning square arm unit is rotated through precision motion transmission drives, by adjustable speed electric motors (20, 37) axially provided with a tachymetric dynamo, a braking unit, and an encoder for synchronizing the speed at which the carriage is advanced, with the linear velocity of the grinding machines, and for allowing an automatic change in the speed at which the glass sheet-turning square arm unit (40, 140) is rotated, to be each time made, according to the dimensions of the glass sheets introduced into the glass sheet grinding plant, the said motors being controlled by a programmable electronic processing unit receiving the data relating to the dimensions of the glass sheets from a scanning glass sheet measuring device (C) located in the initial section of the plant, and fitted with motor-driven, carriage-mounted sensors (7, 8) which horizontally and vertically scan upon control the surface of a glass sheet to be turned, to detect the glass sheet dimensions, the scanning movement of said sensors (7, 8) being imparted to the same by small electric motors provided with encoders working out signals which are proportional to the length and the height of the scanned glass sheet, to be transmitted to the said electronic processing unit.

3. The apparatus according to Claim 2, in which the electric motors (20, 37) for driving into a linear motion the carriage (11) supporting the glass sheet-turning square arm unit (40, 140) and for driving into an angular motion the said square arm unit, respectively drive the carriage (11) and the square glass sheet-turning arm unit (40, 140) through drives (19, 36) of the toothed belt and pulley type and through motion transmission drives (17, 21; 32, 29) of the ball circulating screw/nut screw type, the nut screw (29) for the glass sheet-turning square arm unit (40, 140) being guided by its own rolling means (30, 130) cooperating with guides (31, 131) arranged parallel to the respective driving screw (32), and the said nut screw (29) being connected through links (27) to an angularly adjustable lever (24) which is sideways fixed to the structure (23, 38) carrying the glass sheet-turning square arm unit (40, 140).

4. The apparatus according to Claim 1, in which the suction grippers (41) for gripping a glass sheet to be turned, are fitted on the stem (46) axially moving them, and thanks to the self-aligning bearing (45), the suction grippers (41) are pivotable about the said stem (46), the said suction grippers (41) being provided each with a slide valve (56, 57) which is connected to the suction circuit and is fitted with a feeler (157) projecting from the front side of the respective suction gripper, so that the said feelers (157) being caused to interfere with a glass sheet to be turned, open the said slide valves and put under suction the front portion of the suction grippers, whereby the suction grippers are allowed to grip a glass sheet to be turned, suitable means being provided for discontinuing the suction when the suction grippers are caused to release the turned glass sheet.

5. The apparatus according to Claim 1, in which means are provided for selectively controlling the axial actuation of the suction grippers as a function of the dimensions of the glass sheets to be turned, as detected by the glass sheet measuring device (C), by means of which the speed of the glass sheet-turning apparatus is automatically controlled.

6. The apparatus according to Claim 1, in which the electronic processing unit controlling the operation of the glass sheet turning apparatus and the operation of the whole glass sheet grinding plant comprising a plurality of glass sheet turning apparatus, is capable of memorizing the characteristic features of each glass sheet which is expected at a predetermined glass sheet turning position, after a preestablished fixed number of pulses having been emitted from an encoder connected to the to-be-turned glass sheet advancing means, and when a defective or broken glass sheet is removed from the glass sheet processing line, the said electronic processing unit is also capable of automatically setting the glass sheet turning apparatus (R) in the proper condition for acting upon the next-following glass sheet to be turned, whatever be the size of the glass sheet to be turned, provided that its size be within the predetermined limits as foreseen for the glass sheet grinding plant.

EP 0 365 995 A2

Fig. 1

Fig. 7

Fig. 2

Fig. 3

Fig. 4

Fig. 6

Fig.5

Fig.10

EP 0 365 995 A2

EP 0 365 995 A2

Fig.8

Fig.9